# EUROPÄISCHE PATENTSCHRIFT

(11) **EP 1 160 166 B1**
(45) Veröffentlichungstag und Bekanntmachung des Hinweises auf die Patenterteilung: **04.06.2003**
(21) Anmeldenummer: 01810507.2
(22) Anmeldetag: 22.05.2001
(51) Int. Cl.: B65B 23/16, B65B 5/10, B65B 59/00

(54) **Vorrichtung zur Gruppenbildung sowie Verfahren zum Betreiben derselben**
Apparatus for forming groups and method of operating the same
Dispositif pour la formation de groupes et procédé pour son opération

(30) Priorität: 31.05.2000 CH 10972000
(43) Veröffentlichungstag der Anmeldung: 05.12.2001
(73) Patentinhaber: SIG Pack Systems AG, 8222 Beringen (CH)
(72) Erfinder: Hüppi, Emil, 8248 Uhwiesen (CH); Klotz, Armin, 78199 Bräunlingen (CH)
(74) Vertreter: Liebetanz, Michael, Dipl.-Phys.

(56) Entgegenhaltungen:
- EP-A- 0 453 407
- EP-A- 0 526 403
- WO-A-01/02250
- FR-A- 2 501 624

## Beschreibung

Die Erfindung betrifft eine Vorrichtung zur Gruppenbildung zum Einsetzen von einzelnen Stückgütern in einen Behälter sowie ein Verfahren zum Betreiben der selben, gemäss den Oberbegriffen der Ansprüche 1 und 9.

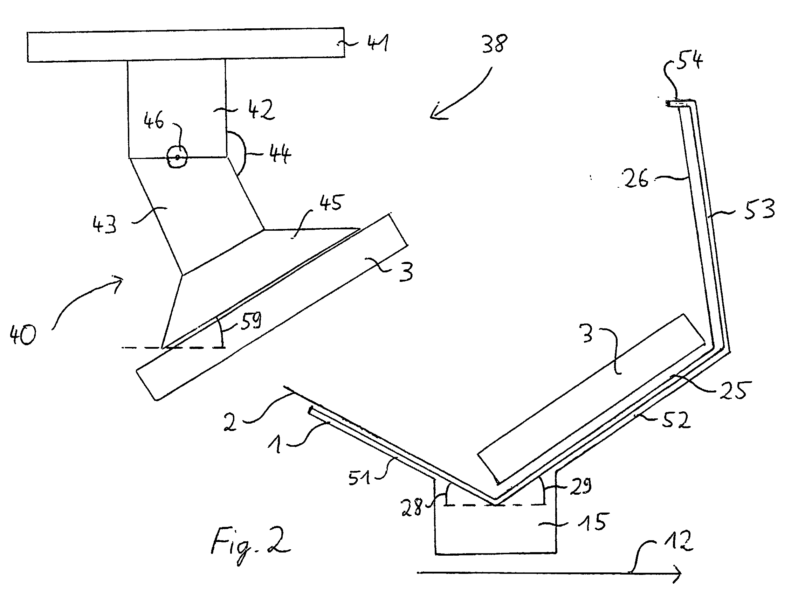

Aus dem Stand der Technik sind verschiedene solche Vorrichtungen und Verfahren bekannt. So beschreibt die EP 0 526 403 ein Verfahren und Vorrichtung zur Bildung von Gruppen von Nahrungsmittelscheiben, die in ungeordneter Reihenfolge auf einem Transportband zu der Vorrichtung transportiert werden. Die dortige Fig. 2 zeigt eine Greifeinrichtung, die eine Nahrungsmittelscheibe von einem Träger abhebt, kippend verschwenkt und in einem Behälter in einer Weise ablegt, dass die Scheiben stehend angeordnet sind, d.h. im wesentlichen senkrecht zum Boden des Behälters stehen.

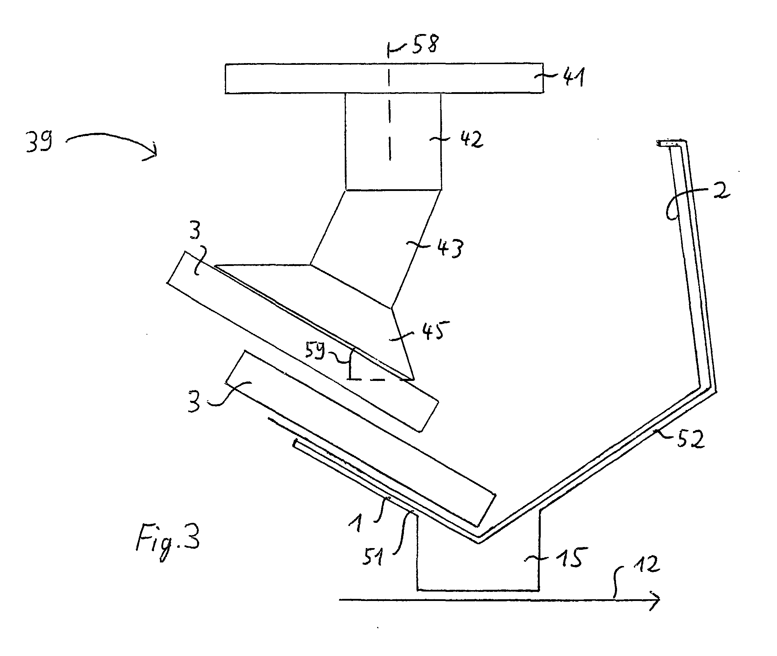

Die EP 0 453 407 beschreibt ein weiteres Verfahren und Vorrichtung zur Bildung von Gruppen von Nahrungsmittelscheiben, bei der, wie aus der dortigen Fig. 3 ersichtlich, die Scheiben liegend in einem Behälter angeordnet werden, d.h. im wesentlichen parallel zum Boden des Behälters auf diesem liegen.

Beim Stand der Technik ist es nachteilig, dass zwei verschiedene Vorrichtungen notwendig sind, um Stückgüter, insbesondere Nahrungsmittelscheiben, wahlweise stehend oder liegend anzuordnen.

Ausgehend von diesem Stand der Technik liegt der Erfindung die Aufgabe zugrunde, eine Vorrichtung zur Gruppenbildung und ein Verfahren der eingangs genannten Art so weiterzubilden, dass Behälter mit Nahrungsmittelscheiben wahlweise stehend oder liegend gefüllt werden können. Weiterhin ist es ein Ziel der vorliegenden Erfindung ein Verfahren und Vorrichtungen anzugeben, mit dem und mit denen ein und derselbe Behälter mit stehenden und/oder liegenden Nahrungsmittelscheiben gefüllt werden können.

Diese Aufgabe wird durch eine Vorrichtung und ein Verfahren mit den Merkmalen des Anspruchs 1 bzw. 9 gelöst.

Im erfindungsgemässen Verfahren werden Stückgüter mit Hilfe einer Greifvorrichtung aufgepickt und die gepickten Stückgüter in die in einer Fördervorrichtung angeordneten Behälter abgelegt, wobei durch Anordnung der Greifvorrichtung in der ersten oder in der zweiten Position die Stückgüter liegend oder stehend in den besagten Behältern ablegbar sind.

Mit diesen Merkmalskombinationen wird eine hohe Flexibilität der Verpackungsstation erreicht. Es sind verschiedene Produktkonfigurationen im Behälter in einfacher Weise realisierbar. Dabei können sogar verschiedene Produkte, insbesondere Produkte unterschiedlicher äusserer Form, in Behälter gefüllt werden. Die Befüllung ist zudem schnell und sicher durchführbar. Durch die Multifunktionalität der Vorrichtung ist eine hohe Leistung der Maschine, d.h. ein hoher Durchsatz, erreichbar.

Es wird direkt im Behälter die gewünschte Konfiguration gebildet. Es kann auf eine beim Stand der Technik notwendige Zwischenstation zwischen erster (stehender oder liegender) und zweiter (liegender oder stehender) Stapelart verzichtet werden, was sowohl den Raumbedarf der gesamten Vorrichtung als auch den Durchsatz erhöht. Die Schrägstellung kann in zwei Richtungen oder kontinuierlich möglich sein. Der Sauger kann selbst deformierend oder mechanisch gesteuert sein.

Nachstehend wird unter Bezugnahme auf die beigefügten Zeichnungen beispielhaft ein Ausführungsbeispiel beschrieben. Es zeigen:
- Fig. 1: eine schematische Darstellung einer Vorrichtung mit Behälterträgern gemäss der Erfindung,
- Fig. 2: eine schematische Darstellung eines Greifers zum Einsatz mit einem Behälterträger gemäss der Erfindung in einer ersten Ausrichtung zur flachen Ablage einer Nahrungsmittelscheibe,
- Fig. 3: eine schematische Darstellung des Greifers nach Fig. 2 in einer zweiten Ausrichtung zur stehenden Ablage einer Nahrungsmittelscheibe,
- Fig. 4 bis 7: schematische Darstellungen von verschiedenen Packkonfigurationen in Behältern, und
- Fig. 8: eine schematische Darstellung einer Saugvorrichtung beim Aufgreifen einer Nahrungsmittelscheibe.

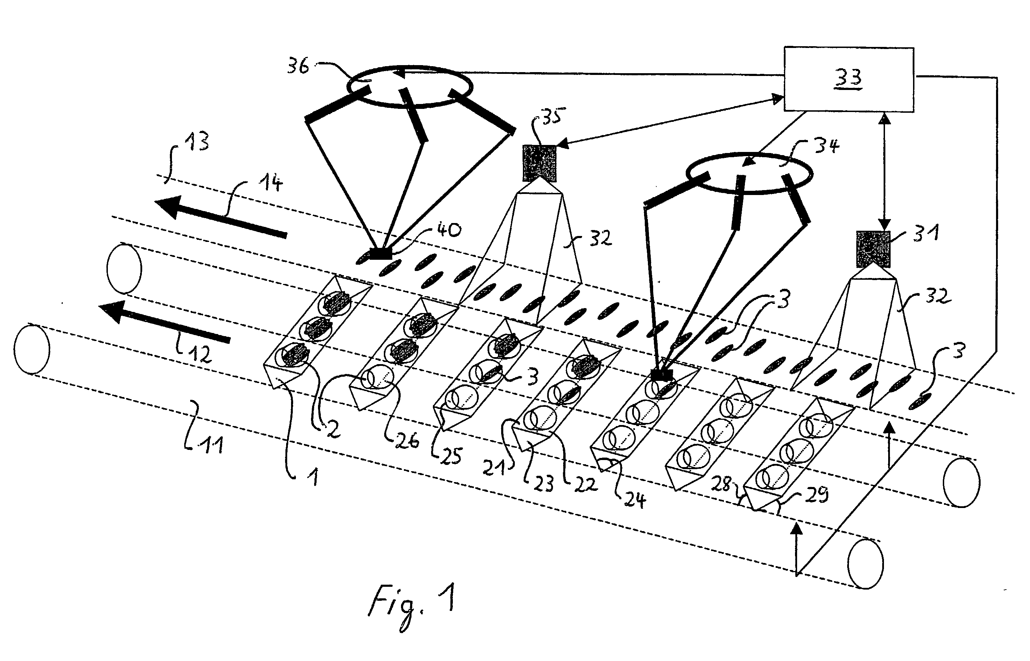

Die Fig. 1 zeigt eine schematische Darstellung einer Vorrichtung mit Behälterträgern 1 gemäss der Erfindung. Die Behälterträger 1 sind auf Laufbändern 11 montiert, die sich in Richtung des Pfeiles 12 fortbewegen. Für den Fachmann sind eine Reihe von bekannten Konfigurationen von Laufbändern 11 und Behälterträgern 1 ersichtlich, die alle in gleichwertiger Weise einsetzbar sind.

Die Behälterträger 1 können prismenförmige hohle Kästen sein, in denen die Behälter 2 einsetzbar sind. Die Prismenträger 1 verfügen über zwei quer zur Bewegungsrichtung 12 liegende Bodenwände 21 bzw. 22, die an den Seiten des Prismenträgers 1 mit Seitenwänden 23 abgeschlossen oder offen sind. An der Seitenwand 23 ist gut zu erkennen, dass die Bodenwände 21 bzw. 22 einen Winkel 24 von ungefähr 90 Grad zueinander bilden. Die Behälter 2 sind dabei in der Fig. 1 mit dem Boden 25 in Bewegungsrichtung 12 auf die Bodenwand 21 aufgesetzt. Wie im Zusammenhang mit anderen Fig. noch gesehen werden kann, können die Behälter 2 auch auf die Bodenwand 22 aufgesetzt werden. Die Seitenwände 26 des Behälters 2 sind einseitig an der Wand 22 abgestützt.

In der Fig. 1 sind drei Behälter 2 nebeneinander in dem Prismenträger 1 angeordnet. Dabei können in der Zeichnung nicht dargestellte Seitenanschläge für die Behälter 2 vorgesehen sein, mit denen die Ausrichtung und die Fixierung der Behälter 2 an ihrer Position in dem Prismenträger 1 gewährleistet wird.

Parallel zu dem Laufband 11 ist ein Förderband 13 angeordnet, welches sich in gleicher Bewegungsrichtung, entsprechend dem Pfeil 14, wie das Laufband 11 bewegt. Es ist aber auch möglich, die Vorrichtung im Gegenstrombetrieb zu betreiben. Auf dem Förderband 13 werden, geordnet oder ungeordnet, Nahrungsmittelscheiben 3 gefördert. Als Nahrungsmittelscheiben kommen jede Art von länglichen, runden, eckigen, ovalen oder geometrisch kompliziertere, wie beispielsweise durch Polygonzüge angenäherte Elemente in Frage, wobei sich vorteilhafterweise zwei Dimensionen der Nahrungsmittelscheiben wie Breite und Höhe stark unterscheiden.

Die Nahrungsmittelscheiben 3 werden von einer ersten optischen Erfassungsstation 31 mit einem Erfassungskegel 32 auf dem Förderband 13 in ihrer Lage und Orientierung erfasst und an eine Steuereinrichtung 33 weitergemeldet. Die Steuereinrichtung 33 steuert eine erste Pickervorrichtung 34 an, die vorbestimmte Nahrungsmittelscheiben 3 von dem Förderband 13 abgreift und in einen Behälter 2 ablegt. In der Fig. 1 sind einige Behälter 2 vollständig gefüllt, was beim dargestellten Ausführungsbeispiel drei Nahrungsmittelscheiben 3 bedeutet, einige Behälter 2 sind nur teilweise gefüllt, auch wenn sie schon den Befüllungsbereich der ersten Pickervorrichtung 34 verlassen haben. Aus diesem Grunde ist eine zweite optische Erfassungsstation 35 mit einem Erfassungskegel 32 und eine zweite Pickervorrichtung 36 vorgesehen, die wiederum von der Steuereinrichtung 33 angesteuert werden. Es ist natürlich auch möglich, dass mehr als zwei Pickervorrichtungen 34, 36 vorgesehen sind, dass lediglich eine Erfassungsstation 31 eingesetzt wird und dass beispielsweise breitere oder mehrere Förderbänder 13 z.B. beidseitig zu dem Laufband 11 angeordnet sind.

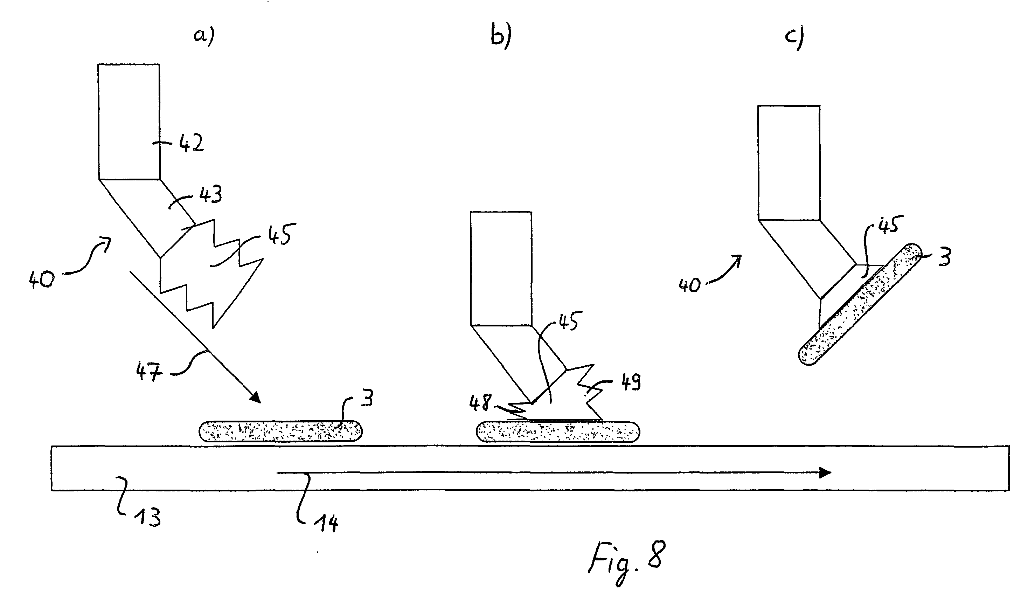

An jeder Pickervorrichtung 34 oder 36 ist ein Greifer 40 vorgesehen, der im Zusammenhang mit der Fig. 8 näher beschrieben wird. Die in der Fig. 1 dargestellte Pickervorrichtung 34 oder 36 entspricht der Lehre der EP 0 250 470, sie kann aber auch durch jede andere Pickervorrichtung ersetzt werden, mit der Nahrungsmittelscheiben von einer ersten Fördereinrichtung abgehoben und zu einer zweiten Fördereinrichtung bewegt werden können.

Die Fig. 2 zeigt eine schematische Darstellung eines Greifers 40 zum Einsatz mit einem Behälterträger 1 gemäss der Erfindung im Querschnitt, wobei der Greifer 40 in einer ersten Ausrichtung zur flachen Ablage einer Nahrungsmittelscheibe 3 in dem Behälter 2 ausgerichtet ist. Der in der Fig. 2 dargestellte Behälterträger 1 ist komplexer ausgestaltet als der nach Fig. 1. Gleiche Merkmale sind in allen Fig. mit den gleichen Bezugszeichen versehen. Der Behälterträger 1 ist an mindestens einer Verbindungsstütze 15 befestigt, die an dem Laufband 11 befestigt sind, welches sich in Richtung des Pfeiles 12 bewegt. Der Behälterträger 1 ist in der Querschnittsansicht aus vier Polygonzügen 51, 52, 53 und 54 zusammengesetzt. Die Polygonzüge 52 und 51 bzw. 53 bilden die Begrenzungen für den Boden 25 bzw. die Seitenwände 26 des Behälters 2. Bei dem dargestellten Ausführungsbeispiel ist der Behälter 2 ein Rotationskörper, z.B. ein stumpfkegelförmiges deformierbares Papierbehältnis. Die kurze Seitenkante 54 bildet einen Anschlag für die obere Seitenwand 26. Vorteilhafterweise sind ebenfalls seitliche Anschläge vorgesehen, um ein seitliches Verrutschen der Behälter 2 zu vermeiden.

Der Greifer 40 ist an einer Sockelplatte 41 der Pickervorrichtung 34 befestigt. Der Greifer 40 verfügt über zwei aneinander gesetzte Arme 42 und 43. Zwischen den Armen 42 und 43 ist ein Gelenk vorgesehen, mit dem der Winkel 44 verändert werden kann, beispielsweise zwischen 90 und 270 Grad. In der Fig. 2 ist der Greifer 40 in einer Position 38 mit einem Winkel 44 von ungefähr 150 Grad dargestellt, wobei sich der Greifer 40 zu einem Winkel von 135 Grad hinbewegt, um die unter der Saugeinrichtung 45 angesaugte Nahrungsmittelscheibe 3 flach auf den Boden 25 des Behälters 2 abzusetzen. Das vordere Ende des Greifers 40 hat somit einen Winkel 59 von beispielsweise 45 Grad mit der Horizontalen. Anstelle einer Saugeinrichtung 45 kann auch jede andere Aufnahmevorrichtung für Nahrungsmittelscheiben 3 vorgesehen sein, da es auf die Verschwenkbarkeit derselben um eine senkrecht zur Transportrichtung 12 und quer zu den Förderbändern 11 verlaufenden Achse ankommt. Dabei ist es zusätzlich möglich, dass die Pickervorrichtung 34 den Greifer 40 auch um weitere Achsen bewegt, um die Nahrungsmittelscheiben 3 von dem Transportband 13 in Richtung der Förderbänder 11 und die Behälter 3 zu bewegen.

Unter dem Begriff Boden 52 und der Seitenwand 51 sind auch Merkmale zu verstehen, die aus einer Gitterkonstruktion bestehen und/oder die nur einzelne Nasen oder Streben beinhaltet, mit denen die Behälter 2 so gehalten werden, dass der Boden bzw. die Seitenwände der Behälter 2 parallel zu dem Boden bzw. der Seitenwand des in den Fig. dargestellten Behälterträgers 1 verlaufen.

Die Fig. 3 zeigt eine schematische Darstellung des Greifers 40, der in einer zweiten Ausrichtung 39 zur stehenden Ablage einer Nahrungsmittelscheibe 3 in dem Behälter 2 ausgerichtet ist. Durch das Verschwenken der Saugeinrichtung um die in Fig. 2 dargestellte Achse 46 kann jede einzelne Nahrungsmittelscheibe 3 entsprechend Fig. 2 oder entsprechend Fig. 3 ausgerichtet werden, um liegend oder stehend in dem Behälter 2 abgelegt zu werden. Alternativ kann der Greifer 40 auch starr verbundene Arme 42 und 43 aufweisen und dafür um die in Fig. 3 dargestellte vertikale Achse 58 rotieren.

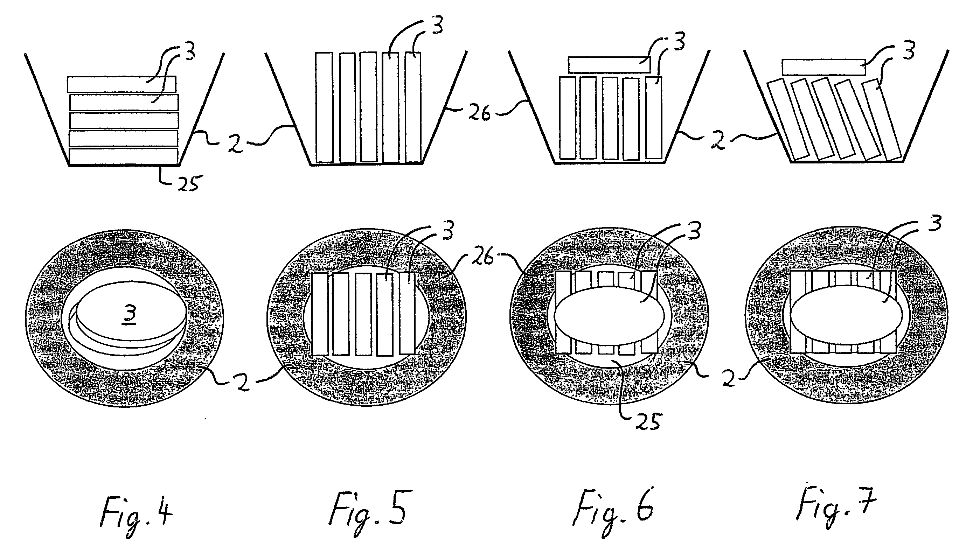

Damit ist es insbesondere möglich, die in den Fig. 4 bis 7 dargestellten verschiedenen Packkonfigurationen in Behältern 3 zu schaffen, wobei die oberen Zeichnungen jeweils einen Querschnitt und die unteren Zeichnungen eine Draufsicht zeigen. Die Fig. 4 zeigt fünf flach aufeinander liegende Nahrungsmittelscheiben 3, die Fig. 5 fünf stehend nebeneinander angeordnete Nahrungsmittelscheiben 3, Fig. 6 fünf stehend nebeneinander angeordnete Nahrungsmittelscheiben 3, auf der eine weitere Nahrungsmittelscheibe 3 liegend abgelegt ist. Wie aus der Fig. 7 zu ersehen ist, können die Nahrungsmittelscheiben 3 bei schrägen Wänden 26 auch leicht geneigt stehen. Weitere in den Fig. nicht dargestellte Konfigurationen umfassen eine unterste flach liegende Nahrungsmittelscheibe, auf der stehende Nahrungsmittelscheiben angeordnet sind, die von einer flachen Nahrungsmittelscheibe abgedeckt sind.

Anstelle der kegelstumpfförmigen Behälter 2 ist die Vorrichtung mit Greifer 40 auch bei jeder anderen Art von Behältnis einsetzbar, beispielsweise quaderförmige oder mit ovaloidem Boden.

Die Fig. 8 zeigt eine schematische Darstellung einer Saugvorrichtung 40 beim Aufgreifen einer Nahrungsmittelscheibe 3. Die Saugvorrichtung 40 verfügt unter den Armen 41 und 42 über einen Faltenbalg 45, die in der Fig. 8 a) entsprechend dem Pfeil 47 in Richtung des Förderbandes 13 abgesenkt wird. Die Fig. 8 b) zeigt die Saugvorrichtung 40 beim Aufsetzen des Faltenbalges 45 auf der Nahrungsmittelscheibe 3. Dabei wird der Bereich 48 zusammengedrückt, während der gegenüberliegende Bereich 49 gestreckt ist. Im Anschluss daran wird die Saugvorrichtung 40 entsprechend Fig. 8 c) von dem Förderband abgehoben, wobei die Nahrungsmittelscheibe 3 durch den über die Saugvorrichtung 40 angelegten Unterdruck an dem Faltenbalg 45 anhaftet, der in beiden Bereichen 48 und 49 maximal zusammengepresst wird, so dass die Nahrungsmittelscheibe 3 senkrecht zur Längsachse des Armes 43 fest an der Saugvorrichtung 40 anliegt.

## Patentansprüche

1. Vorrichtung zur Gruppenbildung zum Einsetzen von einzelnen Stückgütern (3) in einen Behälter (2)
- mit einem Zufuhrförderer (13) zur Zufuhr einzelner Stückgüter (3), die in geordneter oder ungeordneter Formation auf dem Zufuhrförderer (13) fortbewegt werden,
- mit mindestens einer Pickervorrichtung (34), die über eine Greifvorrichtung (40) verfügt, mit der Stückgüter (3) einzeln oder in Gruppen von dem Zufuhrförderer (13) abholbar sind,
- mit einer Fördervorrichtung für die Pickervorrichtung mit mindestens einem Behälterträger (1) ,
- mit einer Ladevorrichtung und
- mit einer Steuervorrichtung (33), mit der der Zufuhrförderer (13) und/oder die Fördervorrichtung, und/oder die Ladevorrichtung steuerbar ist, **dadurch gekennzeichnet, dass** der Behälterträger einen Boden (21) und eine Seitenwand (22) aufweist, welche unter jeweils einem Winkel (28 bzw. 29) gegenüber der Horizontalen der Fördervorrichtung geneigt sind, so dass die Behälter (2) mit ihrem Boden (25) auf dem Boden (52) des Behälterträgers (1) oder mit ihrem Boden (25) auf der besagten Seitenwand (51) des Behälterträgers (1) absetzbar sind, dass in der Ladevorrichtung Behälter (2) wahlweise mit ihrem Boden (25) auf dem Boden (52) des Behälterträgers (1) oder mit ihrem Boden (25) auf der besagten Seitenwand (51) des Behälterträgers (1) absetzbar sind, und dass beim Eingang in die Pickervorrichtung (34) zumindest teilweise leere Behälter (2) durch Ausrichtung der Greifvorrichtung (40) in einer ersten (38) oder zweiten (39) Position wahlweise mit stehenden oder liegenden Stückgütern (3) füllbar sind.

2. Vorrichtung nach Anspruch 1, **dadurch gekennzeichnet, dass** das vordere Ende (46) der Greifvorrichtung (40) einen Winkel (59) zwischen 30 und 60 Grad gegenüber der horizontalen Ebene oder der Ebene des Bodens (25) von zu befüllenden Behältern (2) aufweist.

3. Vorrichtung nach Anspruch 2, **dadurch gekennzeichnet, dass** sie eine Sauggreifvorrichtung aufweist, deren Saugfläche während des Aufpickvorganges (48, 49) deformierbar ist, oder dass die Sauggreifvorrichtung ein mechanisch gesteuerter Sauggreifer ist, dessen Frontfläche gegenüber der Horizontalen verschwenkbar ist.

4. Vorrichtung nach einem der vorstehenden Ansprüche, **dadurch gekennzeichnet, dass** die Greifvorrichtung (40) über zwei aneinander angelenkte Arme (42, 43) verfügt, mit denen das vordere Ende (45) der Greifvorrichtung mindestens zwischen einer ersten Position (38) und einer zweiten Position (39) verschwenkbar (46) ist.

5. Vorrichtung nach einem der vorstehenden Ansprüche, **dadurch gekennzeichnet, dass** die erste (38) und die zweite (39) Position einen Winkel (59) von ungefähr 45 Grad mit der Horizontalen bilden, so dass das vordere Ende (45) der Greifvorrichtung (40) zwischen den beiden besagten Positionen (38, 39) um 90 Grad verschwenkbar ist.

6. Vorrichtung nach einem der vorstehenden Ansprüche 1 bis 3, **dadurch gekennzeichnet, dass** die Greifvorrichtung (40) über einen zur Vertikalen geneigten, um eine vertikale Achse (58) drehbaren Arm (42, 43) verfügt, wobei durch eine Drehung des Armes (42, 43) um 180 Grad um die besagte Achse (58) das vordere Ende (45) der Greifvorrichtung mindestens zwischen einer ersten Position (38) und einer zweiten Position (39) verschwenkbar ist.

7. Vorrichtung nach einem der vorstehenden Ansprüche, **dadurch gekennzeichnet, dass** die Behälterträger (1) quer zur Förderrichtung (12) auf der Fördervorrichtung (11) befestigt sind und/oder dass eine Vielzahl von Behälterträgern (1) in einem konstanten Abstand zueinander angeordnet sind.

8. Vorrichtung nach einem der vorstehenden Ansprüche, **dadurch gekennzeichnet, dass** vor dem Zufuhrförderer (13) mindestens eine Bildaufnahmeeinheit (31) angeordnet ist, mit der die Stückgüter (3) auf dem Zufuhrförderer (13) in ihrer jeweiligen Position erfassbar sind, wobei die von der Bildaufnahmeeinheit (31) ermittelten Datensignale an die Steuereinrichtung (33) übermittelbar sind und die gepickten Stückgüter (3) in vorbestimmter Orientierung in einen vorbestimmten Behälter (2) platzierbar sind.

9. Verfahren zum Einsetzen von einzelnen Stückgütern (3) in einen Behälter (2) mit den Verfahrensschritten des Aufpickens von Stückgütern (3) mit Hilfe einer Greifvorrichtung (40) und des Ablegens der gepickten Stückgüter (3) in die in einer Fördervorrichtung angeordneten Behälter (2), **dadurch gekennzeichnet, dass** die Behälter (2) wahlweise mit ihrem Boden (25) auf einen Boden (52) eines Behälterträgers. (1) oder mit ihrem Boden (25) auf einer Seitenwand (51) des Behälterträgers (1) abgesetzt werden, wobei ein Boden (21) und eine Seitenwand (22) des Behälterträgers (1) unter jeweils einem Winkel (28 bzw. 2g) gegenüber der Horizontalen der Förder vorrichtung geneigt sind , und dass durch Anordnung der Greifvorrichtung (40) in einer ersten (38) oder in einer zweiten (39) Position die Stückgüter (3) wahlweise liegend oder stehend in den besagten Behältern (2) abgelegt werden.

10. Verfahren nach Anspruch 9, **dadurch gekennzeichnet, dass** zuerst eine erste Anzahl von 4 bis 7 stehenden Stückgütern (3) und danach auf den Kanten der stehenden Stückgüter (3) eine zweite Anzahl von 0 bis 3 liegenden Stückgütern (3) in dem Behälter (2) abgelegt werden.

## Claims

1. Group-forming arrangement for inserting individual piece goods (3) into a container (2)
- having a feed conveyor (13) for feeding individual piece goods (3), which are advanced in an ordered or random formation on the feed conveyor (13),
- having at least one picker arrangement (34), which has a gripping arrangement (40) by means of which piece goods (3) can be collected individually or in groups from the feed conveyor (13),
- having a conveying arrangement for the picker arrangement with at least one container carrier (1),
- having a loading arrangement, and
- having a control arrangement (33), by means of which the feed conveyor (13) and/or the conveying arrangement and/or the loading arrangement can be controlled, **characterized in that** the container carrier has a base (21) and a side wall (22), which are inclined at an angle (28 and 29, respectively) in each case in relation to the horizontal of the conveying arrangement, with the result that the containers (2) can have their base (25) set down on the base (52) of the container carrier (1) or have their base (25) set down on the said side wall (51) of the container carrier (1), **in that**, in the loading arrangement, containers (2) can optionally have their base (25) set down on the base (52) of the container carrier (1) or have their base (25) set down on the said side wall (51) of the container carrier (1), and **in that**, upon introduction into the picker arrangement (34), at least partially empty containers (2) can be filled optionally with vertically upright or horizontally lying piece goods (3) by the gripping arrangement (40) being oriented in a first (38) or second (39) position.

2. Arrangement according to Claim 1, **characterized in that** the front end (46) of the gripping arrangement (40) has an angle (59) of between 30 and 60 degrees in relation to the horizontal plane or the plane of the base (25) of containers (2) which are to be filled.

3. Arrangement according to Claim 2, **characterized in that** it has a suction gripping arrangement, of which the suction surface can be deformed during the pick-up operation (48, 49), or **in that** the suction gripping arrangement is a mechanically controlled suction gripper, of which the front surface can be pivoted in relation to the horizontal.

4. Arrangement according to one of the preceding claims, **characterized in that** the gripping arrangement (40) has two arms (42, 43) which are articulated on one another and by means of which the front end (45) of the gripping arrangement can be pivoted (46) at least between a first position (38) and a second position (39).

5. Arrangement according to one of the preceding claims, **characterized in that** the first (38) and the second (39) positions form an angle (59) of approximately 45 degrees with the horizontal, with the result that the front end (45) of the gripping arrangement (40) can be pivoted through 90 degrees between the said two positions (38, 39).

6. Arrangement according to one of the preceding Claims 1 to 3, **characterized in that** the gripping arrangement (40) has an arm (42, 43) which is inclined in relation to the vertical and can be rotated about a vertical axis (58), it being possible, by virtue of the arm (42, 43) being rotated through 180 degrees about the said axis (58), for the front end (45) of the gripping arrangement to be pivoted at least between a first position (38) and a second position (39).

7. Arrangement according to one of the preceding claims, **characterized in that** the container carriers (1) are fastened on the conveying arrangement (11) transversely to the conveying direction (12), and/or **in that** a multiplicity of container carriers (1) are arranged at constant intervals from one another.

8. Arrangement according to one of the preceding claims, **characterized in that** arranged upstream of the feed conveyor (13) is at least one image recording unit (31), which can detect the respective position of the piece goods (3) on the feed conveyor (13), it being possible for the data signals determined by the image recording unit (31) to be transmitted to the control device (33) and for the picked piece goods (3) to be placed with predetermined orientation in a predetermined container (2).

9. Process for inserting individual piece goods (3) into a container (2), having the process steps of picking up piece goods (3) with the aid of a gripping arrangement (40) and depositing the picked piece goods (3) into the containers (2) provided in a conveying arrangement, **characterized in that** the containers (2) optionally have their base (25) set down on a base (52) of a container carrier (1) or have their base (25) set down on a side wall (51) of the container carrier (1), a base (21) and a side wall (22) of the container carrier (1) being inclined at an angle (28 and 29, respectively) in each case in relation to the horizontal of the conveying arrangement, and **in that** the piece goods (3) are deposited optionally in a horizontally lying or vertically upright or position in the said containers (2) by virtue of the gripping arrangement (40) being arranged in a first (38) or in a second (39) position.

10. Process according to Claim 9, **characterized in that** first of all a first number of from 4 to 7 vertically upright piece goods (3) are deposited in the container (2), and then a second number of from 0 to 3 horizontally lying piece goods (3) are deposited therein on the edges of the vertically upright piece goods (3).

## Revendications

1. Dispositif pour la formation de groupes pour l'insertion d'unités de produit (3) dans un récipient (2)
- comprenant un convoyeur d'amenée (13) pour l'amenée d'unités de produit individuelles (3), qui sont avancées en formation ordonnée ou désordonnée sur le convoyeur d'amenée (13),
- comprenant au moins un dispositif de saisie (34) qui dispose d'un dispositif de préhension (40) avec lequel les unités de produit (3) peuvent être prélevées individuellement ou en groupes du convoyeur d'amenée (13),
- comprenant un dispositif de transport pour le dispositif de saisie avec au moins un support de récipient (1),
- comprenant un dispositif de chargement et
- comprenant un dispositif de commande (33), avec lequel le convoyeur d'amenée (13) et/ou le dispositif de transport et/ou le dispositif de chargement peut être commandé, caractêrisé en ce que le support de récipient présente un fond (21) et une paroi latérale (22), qui sont inclinés suivant un angle respectif (28, respectivement 29) par rapport à l'horizontale du dispositif de transport, de sorte que les récipients (2) puissent être déposés avec leur fond (25) sur le fond (52) du support de récipient (1) ou avec leur fond (25) sur ladite paroi latérale (51) du support de récipient (1), en ce que des récipients (2) peuvent être déposés dans le dispositif de chargement de manière sélective avec leur fond (25) sur le fond (52) du support de récipient (1) ou avec leur fond (25) sur ladite paroi latérale (51) du support de récipient (1), et en ce qu'à l'entrée dans le dispositif de saisie (34), des récipients au moins partiellement vides (2) peuvent être remplis par orientation du dispositif de préhension (40) dans une première (38) ou une deuxième (39) position de manière sélective avec des unités de produit (3) debout ou couchées.

2. Dispositif selon la revendication 1, **caractérisé en ce que** l'extrémité avant (46) du dispositif de préhension (40) présente un angle (59) entre 30 et 60 degrés par rapport au plan horizontal ou au plan du fond (25) de récipients (2) à remplir.

3. Dispositif selon la revendication 2, **caractérisé en ce qu'**il présente un dispositif de préhension par aspiration, dont la surface aspirante peut être déformée pendant l'opération de saisie (48, 49), ou **en ce que** le dispositif de préhension par aspiration est un dispositif de préhension aspirant commandé mécaniquement, dont la surface frontale peut pivoter par rapport à l'horizontale.

4. Dispositif selon l'une quelconque des revendications précédentes, **caractérisé en ce que** le dispositif de préhension (40) dispose de deux bras articulés l'un à l'autre (42, 43), avec lesquels l'extrémité avant (45) du dispositif de préhension peut pivoter (46) au moins entre une première position (38) et une deuxième position (39).

5. Dispositif selon l'une quelconque des revendications précédentes, **caractérisé en ce que** la première (38) et la deuxième (39) positions forment un angle (59) d'environ 45 degrés avec l'horizontale, de sorte que l'extrémité avant (45) du dispositif de préhension (40) puisse pivoter entre lesdites deux positions (38, 39) de 90 degrés.

6. Dispositif selon l'une quelconque des revendications précédentes 1 à 3, **caractérisé en ce que** le dispositif de préhension (40) dispose d'un bras (42, 43) incliné par rapport à la verticale, pouvant tourner autour d'un axe vertical (58), l'extrémité avant (45) du dispositif de préhension pouvant pivoter au moins entre une première position (38) et une deuxième position (39) par une rotation du bras (42, 43) de 180 degrés autour dudit axe (58).

7. Dispositif selon l'une quelconque des revendications précédentes, **caractérisé en ce que** les supports de récipient (1) sont fixés transversalement à la direction de transport (12) sur le dispositif de transport (11) et/ou **en ce qu'**une pluralité de supports de récipients (1) sont disposés à une distance constante les uns des autres.

8. Dispositif selon l'une quelconque des revendications précédentes, **caractérisé en ce qu'**avant le convoyeur d'amenée (13) est disposée au moins une unité d'enregistrement d'image (31) avec laquelle les unités de produit (3) peuvent être détectées dans leur position respective sur le convoyeur d'amenée (13), les signaux de données détectés par l'unité d'enregistrement d'image (31) pouvant être transmis au dispositif de commande (33) et les unités de produit (3) saisies pouvant être placées dans une orientation prédéterminée dans un récipient prédéterminé (2).

9. Procédé pour insérer des unités de produit individuelles (3) dans un récipient (2), comprenant les étapes de procédé de saisie d'unités de produit (3) à l'aide d'un dispositif de préhension (40) et de dépose des unités de produit (3) saisies dans les récipients (2) disposés dans un dispositif de transport, **caractérisé en ce que** les récipients (2) sont déposés de manière sélective avec leur fond (25) sur un fond (52) d'un support de récipient (1) ou avec leur fond (25) sur une paroi latérale (51) du support de récipient (1), un fond (21) et une paroi (22) du support de récipient (1) étant inclinés suivant un angle respectif (28, respectivement 29) par rapport à l'horizontale du dispositif de transport, et **en ce que**, par l'agencement du dispositif de préhension (40) dans une première (38) ou une deuxième (39) positions, les unités de produit (3) sont déposées de manière sélective couchées ou debout dans lesdits récipients (2).

10. Procédé selon la revendication 9, **caractérisé en ce qu'**une première pluralité de 4 à 7 unités de produit de bout (3) sont d'abord déposées dans le récipient (2), puis sur les bords des unités de produit debout (3), une deuxième pluralité de 0 à 3 unités de produit couchées (3).
